# EUROPEAN PATENT SPECIFICATION

(11) **EP 1 503 282 B1**
(45) Date of publication and mention of the grant of the patent: **14.09.2005**
(21) Application number: 03017306.6
(22) Date of filing: 31.07.2003
(51) Int. Cl.: G06F 9/445, H04L 29/08

(54) **Automatically configuring computer**
Automatische Konfiguration eines Computers
Configuration automatique d' un ordinateur

(43) Date of publication of application: 02.02.2005
(73) Proprietor: SAP Aktiengesellschaft, 69190 Walldorf (DE)
(72) Inventor: Scheibli, Daniel, 76137 Karlsruhe (DE)
(74) Representative: Cohausz & Florack

(56) References cited:
- WO-A-00/54149
- WO-A-01/29661
- US-A1- 2003 005 096

## Description

The present invention relates to a method for automatically configuring a new computer within a computer network. The invention further relates to a computer system for automatically configuring a new computer within a computer network. The invention also refers to a computer program product for automatically configuring a new computer within a computer network as well as a computer readable medium comprising such a computer program product.

A new computer may be understood in the sense that it is introduced within a network. The computer is a new member within the network, but needs not to be new in the sense of being unused. It may be possible to move, and shift computers within different networks. Once the computer is connected to a network it is new until it has been configured. The computer may as well be understood as a new server, or just server.

In a computer environment with a plurality of computers, such as in blade server technology, it is necessary that the system administrator has knowledge about all installed computers and services or sets of services. Further, the deployment of new servers should be possible without any human interaction and within minimum time. Booting of new servers should be possible within short time.

Server may stand for a computer (i.e. a processor with memory) that executes the service. A set of servers is made up of at least one computer, or server (with processor and memory).

The computers provide services to service customers. A service may stand for software that is part of a business application, for example, a database node, an application component, a J2EE engine, an Internet portal etc. A set of services may stand for at least one service. Conveniently, a set makes up an Enterprise Service Architecture (ESA).

To provide reliable services or sets of services, complex network architecture is necessary. The costs in such data centres are growing exponentially with complexity of the installation. New services and infrastructure, such as new computers, require manual labour and such are cost intensive. Also changes within the environment, as well as changing requirements of the services require manual labour.

From US 2003005096 A1 it is known to facilitate a pre-boot execution environment remote boot process between clients and multiple servers. All clients are initially directed to the address of the central boot server when they initially request remote boot service. By providing an initial bootstrap, the client is enabled to request and receive a list of alternate boot server addresses. The client may select a boot server from the list and request the next program from the selected boot server.

To install new services or sets of services as well as increased requirements for existing services requires adding new servers, computers and services to a data centre. The installation causes many actions to be carried out and an unpredictable time is needed. In particular, in a computing on demand approach the computers and servers have to be installed quickly. The actions taken to provide a computer within a computer network are mostly standardised. In a productive environment, which is a computer environment installed for a customer to provide a set of services, these tasks have to be carried out quickly, as down time is expensive. In today's environments, all tasks are done manually by the system administrators.

Furthermore, during installing a new server within a server rack, current methods need to boot the server manually or automatically at least twice. The boot process consumes a lot of time, as large memory blocks are used in current servers, which are checked during each boot. This consumes a lot of time.

The Total Costs of Ownership (TCO) could be decreased by introducing methods for automatically installing new computers within a computer network within short time. In case a large number of services and/or servers are to be deployed, bringing up a new server requires manual interaction and time. The Total Cost of Ownership of computer networks is thus increased. Service level agreements within productive environments, such as maximum down time, maximum response time, maximum repair time and many others have are subject to time limitation due to boot processes.

### SUMMARY

The invention allows deploying new computers without any human interaction and during minimum time with a method for automatically configuring a new computer within a computer network with the steps of requesting from a computer within the computer network a generic part of an operating system by the new computer to be loaded onto the new computer, identifying within the new computer hardware properties of the new computer by using the generic part of the operating system, executing a domain host configuration protocol client within the computer broadcasting a temporary identification request for the computer the domain host configuration protocol client into the computer network, requesting from the computer network a preparation of a hardware specific part of the operating system by the new computer depending on the identified hardware properties of the new computer, restarting the domain host configuration protocol client of the new computer, broadcasting a permanent identification requests for the new computer from the domain host configuration protocol client into the computer network using a MAC address of a network interface card transmitting a permanent identification for the new computer from the computer network to the new computer upon reception of the permanent identification request using the MAC address of the new computer, communicating the hardware specific data for the operating system at least partially between the computer network and the new computer, and finalizing booting the new computer by executing the hardware specific part of the operating system within the new computer.

According to this method, it may be possible to run an operating system by just booting it once. There is no need for re-booting the computer, thus the computer may be booted only once during its lifetime. By using a generic part of an operating system, similar servers may be installed with the same generic part of the operating system. Differences between the servers require different booting strategies and processes, which are provided by the variable part of the operating system. This variable part of the operating system may be comprised of files and system parameters. The variable part of the operating system may be communicated between the computer and the computer network e.g. by transmitting files and information, or may be partially run on request on a server within the computer network. A significant reduction of time is accomplished by using the inventive method. This may be achieved by eliminating any need for a re-boot and by using pre-build images. The customers are able to integrate new servers into data centres without loss in time due to installing an operating system on the new servers.

According to step a) a generic part of an operating system is loaded onto said computer via said computer network. This generic part may be identical for every new computer. The generic part may include these parts of an operating system, which are to be used obligatory during a boot of a computer.

During step b), hardware properties such as CPU's, RAM, PCI-IDs, MAC-addresses, hard disk drives, network interfaces, graphic interfaces, graphic cards, communication interfaces and many more may be identified using said generic part of said operating system. All these hardware components might have to be installed during booting the computer. By identifying these hardware properties, the generic part of the OS, e.g. a linuxrc file, may also prepare a set of data including some of these properties, to be sent to the computer network. Also, all hardware properties may be sent to the computer network and the relevant information may be extracted within the computer network.

Thus, in step c), hardware specific data may be requested to be prepared within the computer network. These hardware specific data may be configuration files for configuring the computer as well as executable files and libraries or drivers.

According to a preferred embodiment, prior to step a), a pre-boot execution environment (PXE) of a BIOS is started within said computer and broadcasts from said computer a PXE request into said computer network. A PXE request may be similar to a Dynamic Host Configuration Protocol (DHCP) request. As the computer does not know any address of any server within the computer network, the PXE request is send in broadcast mode. That means that every computer within the computer network hears this request.

According to a preferred embodiment, upon reception of said PXE request from said computer, a server within said computer network broadcasts a PXE reply to said computer providing at least an address of a server within said computer network as well as a file name. Any server, which is able to reply a PXE request may answer to the broadcasted PXE request. This may be a DHCP server. The DHCP server answering the PXE request may provide at least a name and an IP-address of a trivial file transfer protocol (TFTP) server or a DHCP-server within the network. Further, it may provide a file name of a bootloader. It may also provide a network configuration information such as IP-address, subnet-mask, gateway and further information for using the computer within the computer network. The PXE reply may be send in unicast to the computer, in case the MAC-address of the computer has already been send to the computer network during the PXE request.

According to a method of claim 4, it is preferred that upon reception of said PXE reply within said computer said bootloader is requested from said server within said computer network and transmitted from said server to said computer and executed within said computer. The PXE reply comprises the IP-address of an TFTP-server and the file name of the bootloader. Therefore, the computer may request the bootloader and receive the corresponding file being transmitted from the server to the computer. The bootloader allows booting any operating system. In the present case, the bootloader may only allow booting exactly the one operating system which should be used for the computer.

For configuring the bootloader, a method according to claim 5 is preferred, as said bootloader requests boot configuration parameters from said computer network. These configuration parameters allow the selection of a central operating system.

Preferably, as proposed by claim 6, in step a), a kernel of said OS is requested from said computer network and transmitted from said computer network to said computer. A kernel is a central process for each operating system. For example within Linux, the file linuxrc may be a file, script, which is executed within the kernel during booting. The kernel allows booting a computer up to a certain point where further, hardware specific data are required. A kernel is obligatory for each operating system to run.

It is further preferred that an initial RAM disk is requested from said computer network and transmitted from said computer network to said computer. The initial RAM disk may comprise essential files and configuration information for booting the computer. These files may be drivers for network interface cards or DHCP clients to be run on the computer.

According to claim 8, in step b) a network interface card (NIC) is identified within said computer by said generic part of said operating system and a driver for said NIC is loaded from said RAM disk by said generic part of said operating system. Thus, a network interface card is ready to be run. A DHCP client may be run on the network interface card. The DHCP client may not know the actual address (IP-address, name) of a DHCP server within the computer network. It is also possible that the DHCP client may retrieve an address of a DHCP server within the computer network from a file entry within the RAM disk.

In case the DHCP client does not know the actual address of the DHCP server within the computer network, a method according to claim 9 is proposed. According to claim 9, a DHCP client is executed within said computer and said DHCP client broadcasts a temporary identification request for said computer. As the DHCP client does not know the actual address of the DHCP server, it broadcasts its DHCP request into the computer network. Any DHCP server within the computer network may answer this request.

It is proposed that said temporary identification for said computer is provided out of an address range upon reception of said temporary identification request from said DHCP server. The request for a temporary identification may be a DHCP request.

Exemplarily, this DHCP request, in case it needs to be broadcasted, first broadcasts a DHCP discover message. This is a general request for network configuration information. This request also comprises the MAC-address of the computer. A server receiving this DHCP discover message transmits in unicast mode configuration information for configuring the DHCP client within a DHCP offer message to the computer using the MAC-address. The computer, after reception of a DHCP offer message, sends a DHCP request message, choosing any one of the possible configurations. Furthermore, the DHCP client asks the respective DHCP server, whether this configuration is still valid. The respective server answers in a DHCP acknowledge message, that the proposed configuration is still valid. After receiving this DHCP acknowledge message, the DHCP client configures itself according to the proposed network configuration. The IP-address provided for the DHCP client may be chosen from a range of IP-addresses.

A preferred embodiment according to claim 10 proposes that in step e) the hardware properties of said computer are transferred from said computer to said computer network and analysed within said computer network and that said hardware specific data for said operating system are created or restored depending whether said hardware properties of said computer are already known within said computer network or not. First, the MAC-address of the computer is analysed. In case this MAC-address is already known, the computer has at least once been registered within the computer network. Its configuration files are known and might be restored. In this case, the computer might be booted using the already stored configuration information. Otherwise, the MAC-address is not known. Then, the DHCP server stores the new MAC-address. The DHCP configuration of the DHCP server is updated according to the information about the computer. Together with storing the MAC-address, a variable part (var-image) of the operating system is created for the computer. The var-image of the operation system may comprise files and configuration information. The var-image may vary, according to the individual hardware specific data. Once the var-image has been created or adapted from a pre-build var-image, the computer receives an acknowledge messages.

A preferred embodiment proposes that after step c) said DHCP client of said computer is restarted and broadcasts a permanent identification request for said computer to said computer network using a MAC-address of said NIC and wherein said computer network transmits a permanent identification for said computer upon reception of said permanent identification request using said MAC-address of said computer. Now the computer already knows configuration information for configuring within said computer network. Only a permanent IP-address may have to be assigned to the computer.

It is preferred that in step i) said computer receives and/or request configuration data using the hardware specific data stored within said computer network for finalizing its configuration. The boot process is finalized by using the var-image, e.g. the data stored in the var-image. This data may be files and configuration information. For finalizing the boot process, files may be transferred to the computer. Also configuration information may be communicated to the computer. It is not necessary that files have to be transferred via the computer network. Within the var-image, selected files to be transferred may be stored. DHCP options may be included within the DHCP reply of the server. These DHCP options may comprise names of drivers, mount points, pathes, and many more. Mount points allow mounting the drives onto the computer. The drives do not necessarily have to be stored on the computer.

A further aspect of the invention is a computer system comprising a plurality of computers during one single boot process for automatically configuring a new computer within a computer network the computer network comprises means for providing a generic part of an operating system to the computer, the computer network comprises means for assembling hardware specific data for the operating system depending on hardware properties of new computers, the computer network comprises means for communicating the hardware specific data between the new computer and the computer network at least partially, and the new computer comprises means for using the generic part of the operating system to identify hardware properties of the new computer, the new computer comprises a domain host configuration protocol client to broadcast a temporary identification request into the computer network, to broadcast a permanent identification requests for the new computer into the computer network using a MAC address of a network interface card, and to receive a permanent identification for the new computer from the computer network, the new computer comprises means for requesting a preparation of hardware specific data for the operating system by the assembling means depending on the identified hardware properties of the new computer.

It is preferred that said computer comprises a BIOS with a pre-boot execution environment (PXE) and broadcasting means for broadcasting from said computer a PXE request into said computer network.

It is also preferred that said computer network comprises at least one server for providing upon reception of said PXE request a PXE reply comprising at least an address of a server within said computer network and a filename of a bootloader to said computer.

Yet another embodiment is that said computer comprises means for receiving and executing a bootloader provided by said computer network.

A further embodiment proposes that said computer comprises means for requesting and executing a kernel of said OS

It is also proposed that said computer comprises means for storing an initial RAM disk requested from said computer network and transmitted from said computer network to said computer.

A computer system where said computer comprises a network interface card (NIC) being identified by said generic part of said OS and a driver for said NIC is stored within and loaded from said RAM disk by said generic part of said OS is also preferred.

A computer system where said computer comprises an execution environment for executing a dynamic host configuration protocol (DHCP) client and broadcasting means for broadcasting from said DHCP client a temporary identification request for said computer from a DHCP server within said computer network is further proposed.

Another embodiment proposes that said computer network comprises means for analysing said transferred hardware properties of said computer and creating means for creating said hardware specific data for said OS.

A further embodiment proposes that said computer network comprises means for storing a MAC address of said NIC of said computer and means for accessing said hardware specific data by said MAC address.

A further aspect of the invention is computer program product for automatically configuring a new computer within a computer network during one single boot process with a computer program stored thereon, the computer program comprising instructions operable to cause a processor within the new computer to request from a computer within the computer network a generic part of an operating system by the new computer to be loaded onto the new computer, identify within the new computer hardware properties of the new computer by using the generic part of the operating system, execute a domain host configuration protocol client within the computer broadcast a temporary identification request for the computer from the domain host configuration protocol client into the computer network, request from the computer network a preparation of a hardware specific part of the operating system by the new computer depending on the identified hardware properties of the new computer, restart the domain host configuration protocol client of the new computer , broadcast a permanent identification requests for the new computer from the domain host configuration protocol client into the computer network using a MAC address of a network interface card receive a permanent identification for the new computer from the computer network communicate the hardware specific data for the operating system at least partially between the computer network and the new computer , and finalize booting the new computer by executing the hardware specific part of the operating system within the new computer.

Yet a further aspect of the invention is a computer readable medium comprising a computer program product for automatically configuring a computer within a computer network, the product comprising instructions operable to cause a processor to load a generic part of an operating system onto said computer, identify hardware properties of said computer by using said generic part of said operating system, request by said computer a preparation of hardware specific data for said operating system from said computer network depending on the identified hardware properties of said computer, and configure said OS using said hardware specific data communicated at least partially between said computer and said computer network.

Referring now to the drawings, in which like numerals represent like elements throughout the several figures, aspects of the present invention and the exemplary operating environment will be described.

### BRIEF DESCRIPTION OF THE DRAWINGS

In the figures show:
- Fig. 1: A block diagram of a computer system;
- Fig. 2: A flowchart according to a method of the invention;
- Fig. 3: A further flowchart according to a method of the invention;
- Fig. 4: A computer system according to the invention.

### DETAILED DESCRIPTION

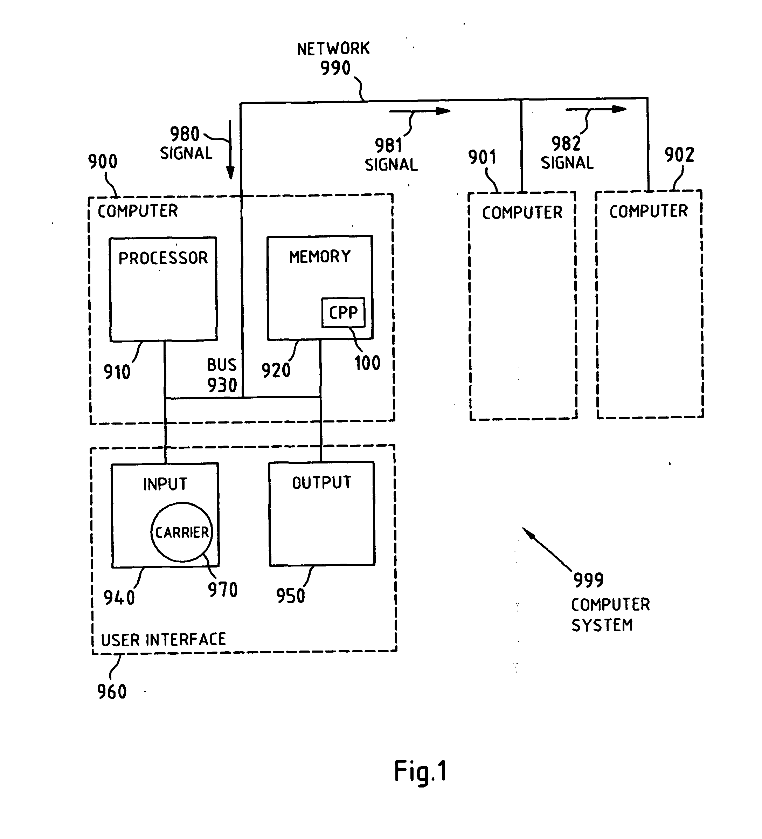

Preferably, the present invention is implemented by computers, within a computer network. An example is illustrated in connection with Fig. 1.

FIG. 1 illustrates a simplified block diagram of exemplary computer system 999 having a plurality of computers 900, 901, 902 (or even more).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980. In respect to computer 900, computer 901/902 is sometimes referred to as "remote computer", computer 901/902 is, for example, a server, a peer device or other common network node, and typically has many or all of the elements described relative to computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like. Processor 910 is, for example, a central processing unit (CPU), a micro-controller unit (MCU), digital signal processor (DSP), or the like.

Memory 920 is elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.

Optionally, memory 920 is distributed. Portions of memory 920 can be removable or non-removable. For reading from media and for writing in media, computer 900 uses well-known devices, for example, disk drives, or tape drives.

Memory 920 stores modules such as, for example, a basic input output system (BIOS), an operating system (OS), a program library, a compiler, an interpreter, and a text-processing tool. Modules are commercially available and can be installed on computer 900. For simplicity, these modules are not illustrated.

CPP 100 has program instructions and - optionally - data that cause processor 910 to execute method steps of the present invention. In other words, CPP 100 can control the operation of computer 900 and its interaction in network system 999 so that is operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer readable medium with computer readable program code to cause the computer to perform methods of the present invention. Further, signal 980 can also embody computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.

Output device 950 presents instructions and data that have been processed. For example, this can be a monitor or a display, (cathode ray tube (CRT), flat panel display, liquid crystal display (LCD), speaker, printer, plotter, vibration alert device. Output device 950 can communicate with the user, but it can also communicate with further computers.

Input device 940 and output device 950 can be combined to a single device. Any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, electromagnetic, optical or wireless (radio) signals.

Networks are commonplace in offices, enterprise-wide computer networks, intranets and the Internet (e.g., world wide web WWW). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), Standard Generalized Markup Language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

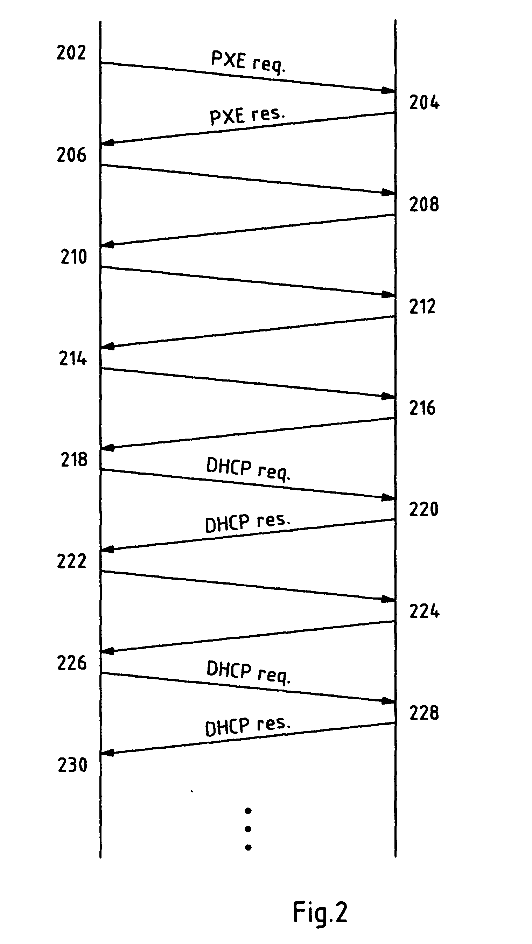

Fig. 2 depicts a succession of requests and responses between the computer and the computer network. In step 202, the computer is powered on and after a while, e.g. after passing the Power On Self Test (POST), executes the pre-boot execution environment of its BIOS. The pre-boot execution environment (PXE) transmits a PXE request into the computer network in broadcast mode. Thus, all computers within the computer network receive such a PXE request. The PXE request may be similar to a DHCP request. PXE requests may only transfer less data than DHCP requests, e.g. IP addresses of TFPT servers might not be transferred.

In step 204, any server within the computer network receives the above-mentioned PXE request. DHCP servers within the computer network receiving the PXE request may answer to this request. In particular for initialising a computer within a network, one DHCP server may act as control station. In the following, the DHCP server answering the requests may be such a control station. In the PXE response, which is also broadcasted, the Control Station may provide its MAC-address, network configuration information such as IP-address, subnet-mask, gateway, name of a TFTP server, IP-address of such a server and name of a bootloader. As being broadcasted, every computer within the computer network may receive the PXE response message. That means that also the new computer receives the PXE response.

In step 206, the computer has received the PXE response. By using the network information, in particular the IP-address of the TFTP server and the name of the bootloader, the computer may request via Trivial File Transfer Protocol (TFTP) the bootloader file from the DHCP server which has answered the PXE request.

In step 208 the TFTP deamon receives the request for the bootloader and provides this bootloader to the computer. This is done in unicast mode, as the address of the computer is known now.

In step 210 the computer receives the bootloader and executes it. During execution of the bootloader, the computer may request in unicast mode from the TFTP server the configuration information for the bootloader.

This request is received in step 212 and answered by providing the requested information. In step 214 the bootloader proceeds according to the received configuration information. It may be possible that the bootloader only provides the possibility of booting one operation system. In case no manual interaction should happen, this may be preferred. The bootloader then may request a kernel of an operating system and an initial RAM disk. This may be a linux kernel together with its initial RAM disk. In step 214 the computer requests the kernel and the RAM disk. In step 216 the deamon TFTP server receives the requests and provides the requested files to the computer.

The computer receives in step 218 the requested files, which may be regarded as generic part of an operating system. After reception of the files, the kernel is started. The initial RAM disk is unpacked. In case of linux, the file linuxrc may be executed. The linuxrc may detect a network interface card (NIC) via a device class request and PCI interface ID. Once the NIC card has been detected, a corresponding driver may be loaded from the RAM disk. Further, the RAM disk may provide a DHCP client, which is also started for managing said network interface card. As the DHCP client does not know a DHCP server within the computer network yet, it broadcasts a DHCP request requesting DHCP configuration information. In step 220, the DHCP request may be received by any DHCP server within the computer network.

The DHCP request and response, as well as the PXE request and response may be carried out in four steps (not depicted). As a first step, the client broadcasts a DHCP discover message. This discover message comprises requests for network configuration information from any DHCP server. Each DHCP server receiving such a DHCP discover message may send in unicast mode a DHCP offer message to the requesting client. Within this DHCP offer message, each DHCP server may provide a possible network configuration. After reception of the DHCP offer message within the client, the client may choose one of the possible network configurations. After choosing one of these configurations the client may check whether this configuration is still available, and valid within the DHCP server. This may be done via a DHCP request message. In case the proposed network configuration is still available and valid, the server may confirm this configuration using a DHCP acknowledge message. After receiving such a DHCP acknowledge message, the client may configure the network interface card according to the proposed configuration. In case the network configuration has become invalid, the DHCP server may deny the use of this configuration. The client may then choose another proposed configuration or may request a new configuration.

The above described method is carried out between steps 218, 220 and 222. The DHCP server provides an IP-address out of an IP-range as a dynamic IP-address for the computer.

In step 220, after receiving or parallel to that, the DHCP acknowledge message, hardware properties of the computer are detected. These may be CPU type, RAM, PCI-ID, MAC-addresses, graphic interfaces, and others. The detected hardware properties are transferred to the DHCP server using the IP-address of the DHCP server.

In step 224, the DHCP server receives the detected hardware configuration of the computer. First of all, the MAC-address of the computer may be analysed. After that, it may be checked, whether this MAC-address is already known. Only in case the MAC-address is not known, the DHCP configuration files may be updated using the information about the computer. Furthermore, a variable part (var-image) of an operation system may be created or adapted from a pre-build one by using the information about the hardware configuration of the computer. The DHCP server, e.g. the control station, approves the reception of the hardware configuration to the computer.

Upon reception of this approval, the computer restarts its DHCP client in step 226. The DHCP client broadcasts again a DHCP request to the DHCP server in broadcast mode. The DHCP server receives in step 228 the DHCP request and provides the computer with a static IP-address and further information using the MAC-address of the computer.

In step 230 the computer analyses the received DHCP options, which may be names of drivers, mount points, IP-addresses, pathes to root disks, root images and others. Further drivers may be mounted. The var-image may also be mounted via NFS. Then, programs may be executed. The last steps of booting the computer may be done without transferring any files from the DHCP server, e.g. the control station to the computer. Information about the configuration and mounting information may be transferred to the computer and the files may be executed. After step 230, the computer is fully booted and ready to be used within the computer network.

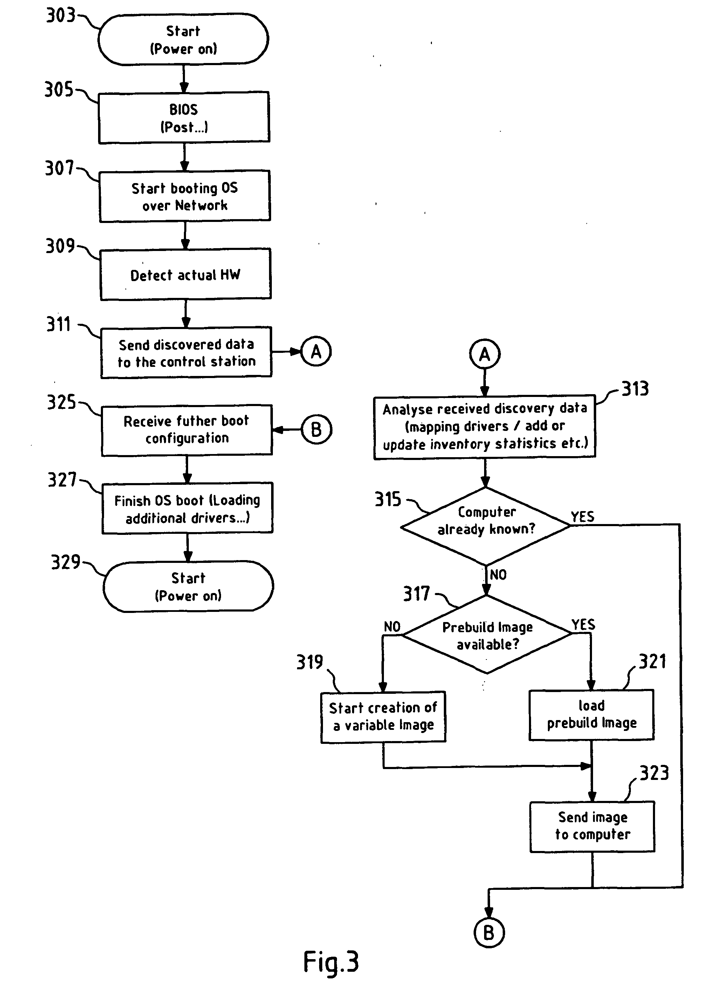

Fig. 3 depicts again the steps for booting the computer. In step 303 the computer is powered on. In step 305, the BIOS is executed and reaches the point where a bootloader and a kernel may be started. The information needed and files required are requested in step 307 from the network. In step 309, the actual hardware configuration of the computer is detected.

In step 311 the discovered hardware configuration data is send to the network. The received hardware configuration data is analysed in step 313. Inventory statistics and DHCP configuration files may be updated. In step 315, it is analysed, whether the computer is already known by using its MAC-address. In case, the computer is not known, in step 317 it is checked whether a pre-build var-image is available for the particular hardware configuration. If such a pre-build var-images is not available, in step 319 a var-image is created according to the information about the hardware configuration of the computer. In case the computer is known, a pre-build var-image is loaded in step 321.

In step 323 the var-image is made available by providing its location, e.g. path information and file name, to the computer. The computer receives the var-image location information and further boot information in step 325. Using this further information in step 327 the computer finishes its booting of the operating system. This may be done by loading additional drivers, mounting images and configuring network interfaces. In step 329, the computer is ready for use within the computer network.

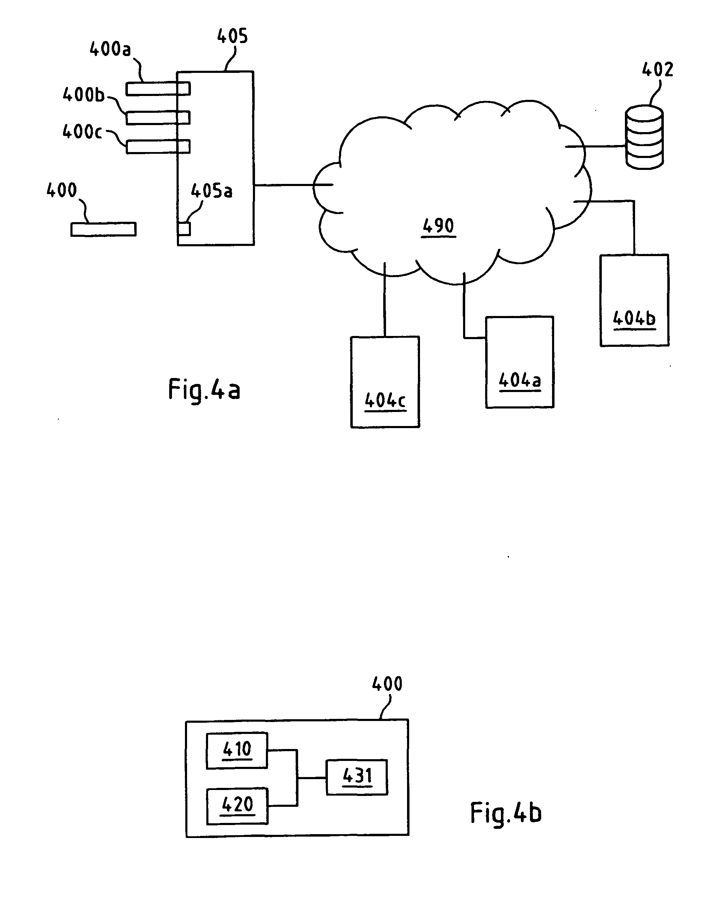

Fig. 4a depicts a computer system according to the invention. In blade server technology, a server rack 405 may be provided. This server rack 405 comprises interfaces 405a, with a plurality of computers 400a, 400b, 400c. A computer 400 may be plugged into a free interface 405a if required.

The server rack is connected to a computer network 490. The computer network 490 connects all computers 400 with all other computers 402, 404 within the computer network 490. The computer network 490 comprises a TFTP server 402 and a plurality of DHCP servers 404. To receive network configuration information, the computer 400 may send DHCP and PXE requests in broadcasts or unicast mode into the computer network 490.

In case of broadcast mode, each DHCP server 404 receives a DHCP request and provides configuration information. The computer 400 may then choose one of the proposed network configurations. For loading files onto the computer 400, these files may be requested from the TFTP server 402. Once the computer 400 knows the IP-address of the TFTP server 402, the files may be transferred from the TFTP server 402 to the computer 400.

Fig. 4b depicts a computer 400. This computer 400 comprises a CPU 410. The CPU 410 allows booting a operating system. This booting may be done in several steps. First, a generic part of an operating system may be booted. This generic part may be loaded into memory 420, which is also provided within computer 400. The connection between the computer 400 and the computer network 490 for transferring files and information may be done via a network interface card 431.

A BIOS of the computer 400 provides a pre-boot environment (PXE). The PXE functionality is supported by the network interface card 431. The network interface card 431 may request a generic and a variable part of an operating system from DHCP server 404 and FTP server 402.

First of all, it allows loading the generic part from the TFTP server. Furthermore, it allows loading and accessing information and files within the variable part of the operating system. The network interface card 431 provides a MAC-address. This MAC-address may be assigned first of all to a dynamic IP-address. This dynamic IP-address may be used for finalizing booting. During finalizing booting, the dynamic IP-address may be replaced by a permanent IP-address. This permanent IP-address may be linked to the MAC-address of the NIC 431. Thus, the computer 400 will be known permanently within the computer network 490, e.g. within DHCP servers within the computer network.

The method and the system enable system administrator to add hardware into the data centre fast and easily. The time for deployment is minimised. A plurality of booting processes it not necessary. The method is very helpful to save time deploying computers.

### REFERENCE NUMBERS

- 202: start booting
- 204: receive PXE request
- 206: configure network
- 208: receive bootloader request
- 210: execute bootloader
- 212: receive bootloader configuration request
- 214: process bootloader configuration request
- 216: receive kernel request, RAM disk request
- 218: start kernel, unpack RAM disk
- 220: receive DHCP request
- 222: detect hardware properties
- 224: analyse hardware properties
- 226: restart DHCP client
- 228: receive DHCP request
- 230: finalize booting

- 303: power on
- 305: start BIOS
- 307: start booting OS over network
- 309: detect actual hardware
- 311: send discovered hardware
- 313: analyse hardware
- 315: check computer
- 317: check available images
- 319: create var-image
- 321: load pre-build image
- 323: send var-image available
- 325: receive boot configuration
- 327: finish boot
- 329: ready for use
- 400: computer
- 402: TFTP server
- 404: DHCP server
- 405: server rack
- 410: CPU
- 420: RAM
- 431: NIC
- 490: computer network

- 900: computer
- 910: processor
- 920: memory
- 930: bus
- 940: input device
- 950: output device
- 960: user interface
- 970: program carrier
- 980: program signal
- 999: computer network system

## Claims

1. Method for automatically configuring a new computer (400) within a computer network during one single boot process with the steps of:
a) requesting from a computer (402, 404) within the computer network (490) a generic part of an operating system by the new computer (400) to be loaded onto the new computer (400),
b) identifying within the new computer (400) hardware properties of the new computer (400) by using the generic part of the operating system,
c) executing a domain host configuration protocol client within the new computer (400)
d) broadcasting a temporary identification request for the new computer (400) from the domain host configuration protocol client into the computer network (490),
e) requesting from the computer network (490) a preparation of a hardware specific part of the operating system by the new computer (400) depending on the identified hardware properties of the new computer (400),
f) restarting the domain host configuration protocol client of the new computer (400),
g) broadcasting a permanent identification requests for the new computer (400) from the domain host configuration protocol client into the computer network (490) using a MAC address of a network interface card
h) transmitting a permanent identification for the new computer (400) from the computer network (490) to the new computer (400) upon reception of the permanent identification request using the MAC address of the new computer (400),
i) communicating the hardware specific data for the operating system at least partially between the computer network (490) and the new computer (400), and
j) finalizing booting the new computer (400) by executing the hardware specific part of the operating system within the new computer (400).

2. A method of claim 1, wherein prior to step a) a pre-boot execution environment of a BIOS is started within the new computer (400) and wherein said pre-boot environment broadcasts from the new computer (400) a pre-boot environment request into the computer network (490).

3. A method of claim 2, wherein upon reception of the pre-boot environment request from the new computer (400) a server (402, 404) within the computer network broadcasts a pre-boot environment reply to the new computer (400) providing at least an address of a server (402, 404) within the computer network (490) and a filename of a bootloader.

4. A method of claim 2, wherein upon reception of the pre-boot environment reply within the new computer (400) the bootloader is requested from the server (402, 404) within the computer network (490) and transmitted from the server (402, 404) to the new computer (400) and executed within the new computer (400).

5. A method of claim 4, wherein the bootloader requests boot configuration parameters from the computer network (490).

6. A method of claim 1, wherein in step a) a kernel of the operating system is requested from the computer network (490) and transmitted from the computer network (490) to the new computer (400).

7. A method of claim 1, wherein in step a) an initial RAM disk is requested from the computer network (490) and transmitted from the computer network (490) to the new computer (400).

8. A method of claim 1, wherein in step b) a network interface card is identified within the new computer (400) by the generic part of the operating system and wherein a driver for the network interface card is loaded from a RAM disk by the generic part of the operating system.

9. A method of claim 1, wherein the temporary identification for the new computer (400) is provided upon reception of the temporary identification request from a domain host configuration protocol server (404) out of an address range.

10. A method of claim 1, wherein in step e) the hardware properties of the new computer (400) are transferred from the new computer (400) to the computer network (490) and analysed within the computer network (490) and wherein the hardware specific data for the operating system are created or restored depending whether the hardware properties of the new computer (400) are already known within the computer network (490) or not.

11. A method of claim 10, wherein configuration files of a domain host configuration protocol server (404) within the computer network (490) are updated according to the received hardware properties of the new computer (400).

12. A method according to claim 11, wherein a MAC address of a network interface card of the new computer (400) is stored within the domain host configuration protocol server (404) and wherein access to the hardware specific data is done via the MAC address.

13. A method of claim 1, wherein in step i) the new computer (400) receives and/or requests configuration data using the hardware specific data stored within the computer network (490) for finalizing its configuration.

14. Computer system comprising a plurality of computers for automatically configuring a new computer within a computer network during one single boot process, implementing a method of any one of claims 1 to 13,
- the computer network (490) comprises means for providing a generic part of an operating system to the new computer (400),
- the computer network (490) comprises means (402, 404) for assembling hardware specific data for the operating system depending on hardware properties of new computers (400),
- the computer network (490) comprises means (402, 404) for communicating the hardware specific data between the new computer (400) and the computer network (490) at least partially, and
- the new computer (400) comprises means (410) for using the generic part of the operating system to identify hardware properties of the new computer (400),
- the new computer (400) comprises a domain host configuration protocol client to broadcast a temporary identification request into the computer network (490),
- to broadcast a permanent identification requests for the new computer (400) into the computer network (490) using a MAC address of a network interface card, and
- to receive a permanent identification for the new computer (400) from the computer network (490),
- the new computer (400) comprises means (431) for requesting a preparation of hardware specific data for the operating system by the assembling means (402, 404) depending on the identified hardware properties of the new computer (400).

15. Computer program product for automatically configuring a new computer within a computer network during one single boot process, implementing a method of any one of claims 1 to 13, with a computer program stored thereon, the computer program comprising instructions operable to cause a processor within the new computer to
- request from a computer (402, 404) within the computer network (490) a generic part of an operating system by the new computer (400) to be loaded onto the new computer (400),
- identify within the new computer (400) hardware properties of the new computer (400) by using the generic part of the operating system,
- execute a domain host configuration protocol client within the computer (400)
- broadcast a temporary identification request for the computer (400) from the domain host configuration protocol client into the computer network (490),
- request from the computer network (490) a preparation of a hardware specific part of the operating system by the new computer (400) depending on the identified hardware properties of the new computer (400),
- restart the domain host configuration protocol client of the new computer (400),
- broadcast a permanent identification requests for the new computer (400) from the domain host configuration protocol client into the computer network (490) using a MAC address of a network interface card
- receive a permanent identification for the new computer (400) from the computer network (490)
- communicate the hardware specific data for the operating system at least partially between the computer network (490) and the new computer (400), and
- finalize booting the new computer (400) by executing the hardware specific part of the operating system within the new computer (400).

16. Computer readable medium comprising a computer program product of claim 15.

## Patentansprüche

1. Verfahren zur automatischen Konfiguration eines neuen Computers (400) innerhalb eines Computer-Netzwerks während eines einzigen Boot-Vorgangs mit den Schritten:
a) Anforderung eines generischen Teiles eines Betriebssystems von einem Computer (402, 404) innerhalb eines Computer-Netzwerks (490) durch den neuen Computer (400), um auf den neuen Computer (400) geladen zu werden,
b) Identifizierung der Hardware-Eigenschaften des neuen Computers (400) innerhalb des neuen Computers (400) durch die Verwendung des generischen Teils des Betriebssystems,
c) Ausführung eines Domain-Host-Konfigurations-Protokoll-Clients innerhalb des neuen Computers (400),
d) Übertragung einer Temporär-Identifikations-Anforderung für den neuen Computer (400) von dem Domain-Host-Konfigurations-Protokoll-Client an das Computer-Netzwerk (490),
e) Anforderung einer Vorbereitung eines hardware-spezifischen Teils des Betriebssystems von dem Computer-Netzwerk (490) durch den neuen Computer (400), abhängig von den identifizierten Hardware-Eigenschaften des neuen Computers (400),
f) Neustart des Domain-Host-Konfigurations-Protokoll-Clients des neuen Computers (400),
g) Übertragung einer permanenten Identifikations-Anforderung für den neuen Computer (400) von dem Domain-Host-Konfigurations-Protokoll-Client an das Computer-Netzwerk (490), wobei eine MAC-Adresse einer Netzwerk-Schnittstellen-Karte verwendet wird,
h) Übertragung einer permanenten Identifikation für den neuen Computer (400) von dem Computer-Netzwerk (490) zu dem neuen Computer (400) auf den Empfang der permanenten Identifikations-Anforderung hin, wobei die MAC-Adresse des neuen Computers (400) verwendet wird,
i) zumindest teilweise Übermittlung der hardware-spezifischen Daten für das Betriebssystem zwischen dem Computer-Netzwerk (490) und dem neuen Computer (400) und
j) Beenden des Bootens des neuen Computers (400) durch Ausführung des hardware-spezifischen Teils des Betriebssystems innerhalb des neuen Computers (400).

2. Verfahren nach Anspruch 1, wobei vor dem Schritt a) eine Pre-Boot-Ausführungs-Umgebung eines BIOS innerhalb des neuen Computers (400) gestartet wird und wobei die Pre-Boot-Ausführungs-Umgebung des neuen Computers (400) in das Computer-Netzwerk (490) eine Pre-Boot-Umgebungs-Anforderung überträgt.

3. Verfahren nach Anspruch 2, wobei auf den Empfang von der Pre-Boot-Umgebungs-Anforderung von dem neuen Computer (400) hin, ein Server (402, 404) innerhalb des Computer-Netzwerks zu dem neuen Computer (400) eine Pre-Boot-Umgebungs-Antwort überträgt, wobei zumindest eine Adresse eines Servers (402, 404) innerhalb des Computer-Netzwerks (490) und ein Dateiname eines Boot-Programmladers geliefert werden.

4. Verfahren nach Anspruch 2, wobei auf den Empfang der Pre-Boot-Umgebungs-Antwort innerhalb des neuen Computers (400) hin, der Boot-Programmlader von einem Server (402, 404) innerhalb des Computer-Netzwerks (490) angefordert wird und von dem Server (402, 404) zu dem neuen Computer (400) übertragen wird und innerhalb des neuen Computers (400) ausgeführt wird.

5. Verfahren nach Anspruch 4, wobei der Boot-Programmlader von dem Computer-Netzwerk (490) die Boot-Konfigurations-Parameter abfragt.

6. Verfahren nach Anspruch 1, wobei bei Schritt a) ein Kernel eines Betriebssystems von dem Computer-Netzwerk (490) angefordert wird und von dem Computer-Netzwerk (490) zu dem neuen Computer (400) übertragen wird.

7. Verfahren nach Anspruch 1, wobei bei Schritt a) eine Initial-RAM-Disc von dem Computer-Netzwerk (490) angefordert wird und von dem Computer-Netzwerk (490) an den neuen Computer (400) übertragen wird.

8. Verfahren nach Anspruch 1, wobei bei Schritt b) eine Netzwerk-Schnittstellen-Karte innerhalb des neuen Computers (400) über den generischen Teil des Betriebssystems identifiziert wird und wobei ein Treiber für die Netzwerk-Schnittstellen-Karte von einer RAM-Disc über den generischen Teil des Betriebssystems geladen wird.

9. Verfahren nach Anspruch 1, wobei die temporäre Identifikation für den neuen Computer (400) auf den Empfang der Temporär-Identifikations-Anforderung von dem Domain-Host-Konfigurations-Protokoll-Server (404) aus einer Adress-Reihe heraus, hin, geliefert wird.

10. Verfahren nach Anspruch 1, wobei bei Schritt e) die Hardware-Eigenschaften des neuen Computers (400) von dem neuen Computer (400) in das Computer-Netzwerk (490) übertragen werden und innerhalb des Computer-Netzwerks (490) analysiert werden und wobei die hardware-spezifischen Daten für das Betriebssystem davon abhängig erstellt oder wiederhergestellt werden, ob die Hardware-Eigenschaften des neuen Computers (400) bereits innerhalb des Computer-Netzwerks (490) bekannt sind oder nicht.

11. Verfahren nach Anspruch 10, wobei Konfigurations-Dateien eines Domain-Host-Konfigurations-Protokoll-Servers (404) innerhalb des Computer-Netzwerks (490) entsprechend der von dem neuen Computer (400) empfangenen Hardware-Eigenschaften aktualisiert werden.

12. Verfahren nach Anspruch 11, wobei eine MAC-Adresse der Netzwerk-Schnittstellen-Karte des neuen Computers (400) innerhalb des Domain-Host-Konfigurations-Protokoll-Servers (404) gespeichert wird und wobei der Zugang zu den hardware-spezifischen Daten über die MAC-Adresse erfolgt.

13. Verfahren nach Anspruch 1, wobei bei Schritt i) der neue Computer (400) Konfigurationsdaten empfängt und/oder abfragt, wobei er die hardware-spezifischen Daten, die innerhalb des Computer-Netzwerks (490) gespeichert sind, zum Beenden seiner Konfiguration verwendet.

14. Computer-System zur automatischen Konfiguration eines neuen Computers innerhalb eines Computer-Netzwerks während eines einzigen Boot-Vorgangs mit einer Vielzahl von Computern und ein Verfahren nach einem der Ansprüche 1 bis 13 implementiert,
- das Computer-Netzwerk (490) umfasst Mittel zur Lieferung eines generischen Teils des Betriebssystems an den neuen Computer (400),
- das Computer-Netzwerk (490) umfasst Mittel (402, 404) zur Assemblierung von hardware-spezifischen Daten für das Betriebssystem, abhängig von den Hardware-Eigenschaften des neuen Computers (400),
- das Computer-Netzwerk (490) umfasst Mittel (402, 404) zur, zumindest teilweisen, Übermittlung der hardware-spezifischen Daten zwischen dem neuen Computer (400) und dem Computer-Netzwerk (490), und
- der neue Computer (400) umfasst Mittel (410) zur Verwendung des generischen Teils des Betriebssystems, um die Hardware-Eigenschaften des neuen Computers (400) zu identifizieren,
- der neue Computer (400) umfasst einen Domain-Host-Konfigurations-Protokoll-Client, um die Temporär-Identifikations-Anforderung in das Computer-Netzwerk (490) zu übertragen,
- um eine permanente Identifikations-Anforderung für den neuen Computer (400) in das Computer-Netzwerk (490) zu übertragen, wobei eine MAC-Adresse der Netzwerk-Schnittstellen-Karte verwendet wird, und
- um eine permanente Identifikation für den neuen Computer (400) von dem Computer-Netzwerk (490) zu empfangen,
- der neue Computer (400) umfasst Mittel (431) zur Anforderung einer Vorbereitung von hardware-spezifischen Daten für das Betriebssystem über die Assemblierungs-Mittel (402, 404), abhängig den identifizierten Hardware-Eigenschaften des neuen Computers (400)

15. Computer-Programm-Produkt zur automatischen Konfiguration eines neuen Computers innerhalb eines Computer-Netzwerks während eines einzigen Boot-Vorgangs, wobei ein Verfahren nach einem der Ansprüche 1 bis 13 implementiert wird, mit einem darauf gespeicherten Computer-Programm, wobei das Computer-Programm ausführbare Befehle umfasst, um auf einen Prozessor im neuen Computer einzuwirken, um
- von dem Computer (402, 404) innerhalb des Computer-Netzwerks (490) einen auf den neuen Computer (400) zu ladenden generischen Teil eines Betriebssystems durch den neuen Computer (400) abzufragen,
- innerhalb des neuen Computers (400) die Hardware-Eigenschaften des neuen Computers (400) unter Verwendung des generischen Teils des Betriebssystems zu identifizieren,
- einen Domain-Host-Konfigurations-Protokoll-Client innerhalb des Computers (400) auszuführen,
- eine Temporär-Identifikations-Anforderung für den Computer (400) von dem Domain-Host-Konfigurations-Protokoll-Client in das Computer-Netzwerk (490) zu übertragen,
- von dem Computer-Netzwerk (490) eine Vorbereitung eines hardware-spezifischen Teils des Betriebssystems durch den neuen Computer (400) abhängig von den identifizierten Hardware-Eigenschaften des neuen Computers (400) abzufragen,
- den Domain-Host-Konfigurations-Protokoll-Client des neuen Computers (400) neu zu starten,
- eine permanente Identifikations-Anforderung für den neuen Computer (400) von dem Domain-Host-Konfigurations-Protokoll-Client in das Computer-Netzwerk (490) zu übertragen, wobei eine MAC-Adresse der Netzwerk-Schnittstellen-Karte verwendet wird,
- eine permanente Identifikation für den neuen Computer (400) von dem Computer-Netzwerk (490) zu empfangen,
- die hardware-spezifischen Daten für das Betriebssystem zwischen dem Computer-Netzwerk (490) und dem neuen Computer (400) zumindest teilweise zu übermitteln und
- das Booten des neuen Computers (400) durch die Ausführung des hardware-spezifischen Teils des Betriebssystems innerhalb des neuen Computers (400) zu beenden.

16. Computer-lesbares Medium, das ein Computer-Programm-Produkt nach Anspruch 15 umfasst.

## Revendications

1. Procédé destiné à configurer automatiquement un nouvel ordinateur (400) au sein d'un réseau informatique au cours d'un processus de démarrage (ou amorce) unique, comprenant les étapes consistant à :
a) demander à un ordinateur (402, 404) se trouvant dans le réseau informatique (490) qu'une partie générique de système d'exploitation soit chargée sur le nouvel ordinateur (400) par le nouvel ordinateur (400),
b) identifier dans le nouvel ordinateur (400) des propriétés relatives au matériel du nouvel ordinateur (400) à l'aide de la partie générique de système d'exploitation,
c) exécuter un protocole client de configuration d'hôte (ou de nom) de domaine dans le nouvel ordinateur (400),
d) émettre une demande d'identification temporaire destinée au nouvel ordinateur (400) à partir du protocole client de configuration d'hôte de domaine vers le réseau informatique (490),
e) demander au réseau informatique (490) une préparation d'une partie spécifique de matériel du système d'exploitation par le nouvel ordinateur (400) selon les propriétés identifiées du matériel du nouvel ordinateur (400),
f) redémarrer le protocole client de configuration d'hôte de domaine du nouvel ordinateur (400),
g) émettre des demandes d'identification permanente destinées au nouvel ordinateur (400) à partir du protocole client de configuration d'hôte de domaine vers le réseau informatique (490) à l'aide d'une adresse MAC de carte réseau,
h) transmettre une identification permanente destinée au nouvel ordinateur (400) à partir du réseau informatique (490) vers le nouvel ordinateur (400) lors de la réception de la demande d'identification permanente à l'aide d'une adresse MAC du nouvel ordinateur (400),
i) communiquer les données spécifiques relatives au matériel destinées au système d'exploitation au moins en partie entre le réseau informatique (490) et le nouvel ordinateur (400), et
j) terminer le démarrage du nouvel ordinateur (400) par l'exécution de la partie spécifique de matériel du système d'exploitation au sein du nouvel ordinateur (400).

2. Procédé selon la revendication 1 au cours duquel, avant l'étape a), un environnement d'exécution de pré-démarrage de BIOS démarre au sein du nouvel ordinateur (400) et dans lequel ledit environnement de pré-démarrage émet à partir du nouvel ordinateur (400) une demande d'environnement de pré-démarrage au sein du réseau informatique (490).

3. Procédé selon la revendication 2 au cours duquel, lors de la réception de la demande d'environnement de pré-démarrage issue du nouvel ordinateur (400), un serveur (402, 404) se trouvant au sein du réseau informatique émet une réponse d'environnement de pré-démarrage destinée au nouvel ordinateur (400), laquelle fournit au moins une adresse de serveur (402, 404) au sein du réseau informatique (490) et un nom de fichier d'un chargeur de démarrage.

4. Procédé selon la revendication 2 au cours duquel, lors de la réception de la réponse d'environnement de pré-démarrage dans le nouvel ordinateur (400), le chargeur de démarrage est demandé à partir du serveur (402, 404) situé au sein du réseau informatique (490) et transmis depuis le serveur (402, 404) vers le nouvel ordinateur (400), puis exécuté au sein du nouvel ordinateur (400).

5. Procédé selon la revendication 4 au cours duquel le chargeur de démarrage demande des paramètres de configuration de démarrage à partir du réseau informatique (490).

6. Procédé selon la revendication 1 au cours duquel, à l'étape a), un noyau (ou partie résidente) du système d'exploitation est demandé à partir du réseau informatique (490) et transmis depuis le réseau informatique (490) en direction du nouvel ordinateur (400).

7. Procédé selon la revendication 1 au cours duquel, à l'étape a), un disque virtuel initial est demandé à partir du réseau informatique (490) et transmis depuis le réseau informatique (490) en direction du nouvel ordinateur (400).

8. Procédé selon la revendication 1 au cours duquel, à l'étape b), une carte réseau est identifiée au sein du nouvel ordinateur (400) par le biais de la partie générique du système d'exploitation et où un pilote correspondant à la carte réseau est chargé à partir d'un disque virtuel par la partie générique du système d'exploitation.

9. Procédé selon la revendication 1 au cours duquel l'identification temporaire du nouvel ordinateur (400) est faite lors de la réception de la demande d'identification temporaire issue d'un serveur (404) protocole de configuration d'hôte de domaine parmi un ensemble d'adresses.

10. Procédé selon la revendication 1 au cours duquel, à l'étape e), les propriétés relatives au matériel du nouvel ordinateur (400) sont transférées depuis le nouvel ordinateur (400) vers le réseau informatique (490) et analysées au sein du réseau informatique (490), et où les données spécifiques relatives au matériel destinées au système d'exploitation sont créées ou restaurées selon que les propriétés relatives au matériel du nouvel ordinateur (400) sont déjà connues au sein du réseau informatique (490) ou non.

11. Procédé selon la revendication 10 au cours duquel les fichiers de configuration d'un serveur (404) protocole de configuration d'hôte de domaine se trouvant au sein d'un réseau informatique (490) sont mis à jour en fonction des propriétés reçues relatives au matériel du nouvel ordinateur (400).

12. Procédé selon la revendication 11 au cours duquel une adresse MAC de carte réseau du nouvel ordinateur (400) est mémorisée au sein du serveur (404) protocole de configuration d'hôte de domaine et où l'accès aux données spécifiques relatives au matériel a lieu par l'intermédiaire de l'adresse MAC.

13. Procédé selon la revendication 1 au cours duquel, à l'étape i), le nouvel ordinateur (400) reçoit et/ou demande des données de configuration à l'aide des données spécifiques relatives au matériel mémorisées au sein du réseau informatique (490), en vue de terminer sa configuration.

14. Système informatique comprenant une pluralité d'ordinateurs au cours d'un processus à démarrage unique, destiné à configurer automatiquement un nouvel ordinateur au sein d'un réseau informatique, qui met en oeuvre un procédé selon l'une quelconque des revendications 1 à 13,
- le réseau informatique (490) comprenant un moyen permettant de fournir une partie générique de système d'exploitation au nouvel ordinateur (400),
- le réseau informatique (490) comprenant un moyen (402, 404) permettant d'assembler des données spécifiques relatives au matériel pour le système d'exploitation selon les propriétés relatives au matériel du nouvel ordinateur (400),
- le système d'exploitation (490) comprenant un moyen (402, 404) permettant de communiquer au moins en partie les données spécifiques relatives au matériel entre le nouvel ordinateur (400) et le réseau informatique (490), et
- le nouvel ordinateur (400) comprenant un moyen (410) permettant d'utiliser la partie générique de système d'exploitation pour identifier les propriétés relatives au matériel du nouvel ordinateur (400),
- le nouvel ordinateur (400) comprenant un protocole client de configuration d'hôte de domaine permettant d'émettre une demande d'identification temporaire au sein du réseau informatique (490), d'émettre une demande d'identification permanente destinée au nouvel ordinateur (400) au sein du réseau informatique (490) à l'aide d'une adresse MAC d'une carte réseau, et de recevoir une identification permanente destinée au nouvel ordinateur (400) à partir du réseau informatique (490),
- le nouvel ordinateur (400) comprenant un moyen (431) permettant de demander une préparation par le moyen d'assemblage (402, 404) de données spécifiques relatives au matériel destinées au système d'exploitation selon les propriétés identifiées relatives au matériel du nouvel ordinateur (400).

15. Programme informatique permettant de configurer automatiquement un nouvel ordinateur au sein d'un réseau informatique au cours d'un processus à démarrage unique, de mettre en oeuvre un procédé selon l'une quelconque des revendications 1 à 13, un programme informatique y étant disponible, le programme informatique comportant des instructions permettant d'amener un processeur se trouvant au sein du nouvel ordinateur à
- demander à un ordinateur (402, 404) se trouvant dans le réseau informatique (490) qu'une partie générique de système d'exploitation soit chargée sur le nouvel ordinateur (400) par le nouvel ordinateur (400),
- identifier dans le nouvel ordinateur (400) des propriétés relatives au matériel du nouvel ordinateur (400) à l'aide de la partie générique de système d'exploitation,
- exécuter un protocole client de configuration d'hôte de domaine dans l'ordinateur (400),
- émettre une demande d'identification temporaire destinée à l'ordinateur (400) à partir d'un protocole client de configuration d'hôte de domaine vers le réseau informatique (490),
- demander au réseau informatique (490) une préparation par le nouvel ordinateur (400) d'une partie spécifique de matériel du système d'exploitation selon les propriétés identifiées du matériel du nouvel ordinateur (400),
- redémarrer le protocole client de configuration d'hôte de domaine du nouvel ordinateur (400),
- émettre des demandes d'identification permanente destinées au nouvel ordinateur (400) à partir du protocole client de configuration d'hôte de domaine vers le réseau informatique (490) à l'aide d'une adresse MAC de carte réseau,
- recevoir une identification permanente destinée au nouvel ordinateur (400) à partir du réseau informatique (490)
- communiquer les données spécifiques relatives au matériel destinées au système d'exploitation au moins en partie entre le réseau informatique (490) et le nouvel ordinateur (400), et
k) terminer le démarrage du nouvel ordinateur (400) par l'exécution de la partie spécifique de matériel du système d'exploitation au sein du nouvel ordinateur (400).

16. Support de lecture informatique comportant un programme informatique selon la revendication 15.
